# EUROPÄISCHE PATENTANMELDUNG

(11) **EP 1 595 900 A1**
(43) Veröffentlichungstag der Anmeldung: **16.11.2005**
(21) Anmeldenummer: 04011533.9
(22) Anmeldetag: 14.05.2004
(51) Int. Cl.: C08G 18/08, C08G 18/54, C09D 17/00, C09B 67/00

(54) **Pastenharze für lösungsmittelhaltige Lacke**

(71) Anmelder: Cytec Surface Specialties Austria GmbH, 8402 Werndorf (AT)
(72) Erfinder: Hobisch, Gerald Dr., 8042 Graz (AT); Morre, Peter, 8020 Graz (AT); Schönbacher, Thomas, 8401 Kalsdorf (AT)
(74) Vertreter: Deckers, Hellmuth Alexander

(57) **Zusammenfassung**

Verwendung von urethanmodifizierten hydrophilen Harzen ABCD als Pastenharze für lösungsmittelhaltige Lacke, wobei die Harze ABCD Umsetzungsprodukte sind von Aldehyd- bzw. Keton-Harzen A, mehrfunktionellen Isocyanaten B mit im Mittel mindestens 2 Isocyanat-Gruppen pro Molekül, aliphatischen Säuren C mit jeweils mindestens einer Säuregruppe und jeweils mindestens einer Gruppe, die mit Isocyanaten unter Bildung einer Urethan- oder Harnstoff-Struktur reagieren kann, sowie aliphatischen Polyäthern D mit mindestens einer Hydroxylgruppe pro Molekül, wobei die Summe der Massenanteile der Edukte A bis D stets 100 % ergibt, und mindestens eines der Edukte C und D eingesetzt wird

## Beschreibung

Die Erfindung betrifft die Verwendung von urethanmodifizierten hydrophilen Harzen als Pastenharze für lösungsmittelhaltige Lacke.

Pastenharze für lösungsmittelhaltige Lacke sind bekannt beispielsweise aus der DE-C 22 18 613, die ein Reaktionsprodukt beschreibt von Hydroxylgruppen enthaltenden Acrylcopolymeren und Carboxylgruppen enthaltenden Verbindungen, die mindestens eine das Pigment dispergierende Gruppe enthalten. Diese dispergierenden Gruppen sind beispielsweise ausgewählt aus Aminogruppen, beta-Hydroxyestergruppen, die durch Reaktion einer Verbindung mit einer Carboxylgruppe mit einem Epoxid entstehen, und weiteren, die insbesondere in der deutschen Patentanmeldung DE-A 17 19 402 beschrieben sind.

Pastenharze für wäßrige Systeme sind häufig abgeleitet von Ammoniumsalzen, Sulfoniumsalzen oder von Epoxid-Amin-Addukten.

Die Pigmentdispersionen, die in den Beispielen der DE-C-22 18 613 beschrieben sind, enthalten sehr hohe Anteile des Dispergiermittels, bezogen auf die Masse der Pigmente. Dies begrenzt den Nutzen dieser Lehre.

Für den Nutzer von Pigmentdispersionen ist es umständlich, unterschiedliche Zubereitungen von Pigmenten aufbewahren oder herzustellen zu müssen, je nachdem, ob die Pigmente in wäßrigen oder in lösungsmittelhaltigen Lacken eingesetzt werden sollen. Es besteht daher die Aufgabe, solche Pigmentzubereitungen zur Verfügung zu stellen, die in wäßrigen und in lösungsmittelhaltigen Lacksystemen in gleicher Weise eingesetzt werden können. Ebenfalls ist erwünscht, eine möglichst geringe Menge des Dispergiermittels, bezogen auf die Masse der Pigmente einzusetzen.

Überraschenderweise wurde gefunden, daß bestimmte Reaktionsprodukte von Säuregruppenhaltigen Polymeren und Aldehyd- oder Ketonharzen außer in der aus dem Stand der Technik bekannten Anwendungsmöglichkeit als Dispergiermittel oder Pastenharz in wäßrigen Systemen sich auch als Dispergiermittel oder Pastenharz für die Pigmentierung von lösungsmittelhaltigen Lacken verwenden lassen.

Die Erfindung betrifft daher die Verwendung als Dispergiermittel für Pigmente in lösungsmittelhaltigen Lacksystemen von urethanmodifizierten hydrophilen Harzen **ABCD,** erhältlich durch Umsetzung von Massenanteilen in der Reaktionsmischung von

| | |
|---|---|
| 10 % bis 90 % | Aldehyd- bzw. Keton-Harzen **A** mit einer Hydroxylzahl von 20 mg/g bis 300 mg/g, einer Erweichungstemperatur von 60 °C bis 140 °C und einer zahlenmittleren molaren Masse Mₙ von 500 g/mol bis 3000 g/mol, |
| 5 % bis 30 % | mehrfunktionellen Isocyanaten **B** mit im Mittel mindestens 2 Isocyanat-Gruppen pro Molekül, |
| 0 % bis 30 % | aliphatischen Säuren **C** mit jeweils mindestens einer Säuregruppe und jeweils mindestens einer Gruppe, die mit Isocyanaten unter Bildung einer Urethan- oder Harnstoff-Struktur reagieren kann, sowie |
| 0 % bis 70 % | eines aliphatischen Polyäthers **D** mit einer zahlenmittleren molaren Masse Mₙ von 200 g/mol bis 8000 g/mol und mindestens einer Hydroxylgruppe pro Molekül, |

wobei die Summe der Massenanteile der Edukte **A bis D** stets 100 % ergibt, und mindestens eines der Edukte **C** und **D** eingesetzt wird.

Die Massenanteile in der Reaktionsmischung betragen bevorzugt für **A** 35 % bis 85 %, für **B** 10 % bis 25 %, für **C** 2 % bis 10 %, und für **D** 5 % bis 30 %, wobei der Massenanteil von **C** gleich Null sein kann, wenn mindestens ein Polyäther **D** eingesetzt wird, oder der Massenanteil von **D** gleich Null sein kann, wenn wenigstens eine der Säuren **C** eingesetzt wird.

Die Aldehyd- bzw. Keton-Harze **A** sind nicht wasserlöslich; es sind bevorzugt Harze, die durch Kondensation von (cyclo)aliphatischen Oxoverbindungen **A1** ausgewählt aus (cyclo)aliphatischen Ketonen **A11** und aliphatischen Aldehyden **A12** gemeinsam mit Harnstoff bzw. dessen Derivaten **A2** (gemeinsam im Folgenden auch als "Harnstoffe" bezeichnet) erhältlich sind.

Als Harnstoff-Derivate **A2** werden im Rahmen der vorliegenden Erfindung N-alkylierte, N-arylierte oder N-acylierte Harnstoffe betrachtet, bei denen mindestens ein und maximal 3 amidische Wasserstoffatome durch einen Alkyl-, Aryl- oder Acylrest substituiert sind. Geeignete Alkylreste sind lineare, verzweigte und cyclische aliphatische Reste mit 1 bis 20 Kohlenstoffatomen, geeignete Arylreste sind (gegebenenfalls alkylsubstituierte) Arylreste mit 5 bis 14 Kohlenstoffatomen wie der Phenyl-, Naphthyl-, o-Tolyl- oder (p-Phenyl)phenyl-Rest. Unter den Acylresten seien Reste R-COverstanden, in denen R die Bedeutung der hier erwähnten Alkyl- und Arylreste haben kann. Selbstverständlich können die amidischen Wasserstoffatome auch unterschiedliche Substituenten der genannten Art tragen. Ebenfalls kommen solche Harnstoff-Derivate in Betracht, bei denen ein Alkylenrest mit 2 bis 4 Kohlenstoffatomen die unterschiedlichen Stickstoffatome miteinander verbindet, wie z. B. Äthylen- und Propylenharnstoff (2-Imidazolidon oder Tetrahydro-2-pyrimidon) und deren Alkyl-, Acyl- und Arylderivate, wobei ebenfalls mindestens ein amidisches Wasserstoffatom erhalten bleibt.

Die Aldehyd- und Ketonharze **A** sind, wie bereits ausgeführt, erhältlich durch Kondensation von Ketonen gemeinsam mit Aldehyden und Harnstoffen, Ketonen mit Harnstoffen oder Aldehyden mit Harnstoffen, und weisen bevorzugt eine Hydroxylzahl von 20 mg/g bis 300 mg/g, einen Erweichungspunkt von 60 °C bis 140 °C und eine zahlenmittlere molare Masse von 500 g/mol bis 3000 g/mol auf. Diese Harze werden üblicherweise durch alkalikatalysierte Kondensation der entsprechenden Oxoverbindungen in Gegenwart der Harnstoffe hergestellt. Geeignete Ketonharze leiten sich ab vor allem von cycloaliphatischen Ketonen **A11** mit bevorzugt 5 bis 12 Kohlenstoffatomen im Ring wie Cyclohexanon oder dessen Alkyl-Derivaten, wobei der cycloaliphatische Ring ein oder mehrere Alkylgruppen tragen kann, und die Alkylgruppen unabhängig voneinander 1 bis 8 Kohlenstoffatome aufweisen, und sind insbesondere ausgewählt aus Methylcyclohexanon, 2-Äthylhexylcyclohexanon und tert.-Butyl-Cyclohexanon. Die Harze lassen sich aus diesen Ketonen oder deren Gemischen nach den bekannten Verfahren erhalten. (siehe Ullmann, 4. Aufl., 12, S. 551, 1976). Weitere geeignete Harze **A** werden durch Kondensation von Aldehyden **A12** in Gegenwart von Harnstoff, substituierten Harnstoffen oder deren Derivaten gemäß A2 erhalten. Dabei sind die aliphatischen Aldehyde **A12** bevorzugt linear oder verzweigt und haben 2 bis 20, bevorzugt 4 bis 10 Kohlenstoffatome. Auch Kondensationsprodukte der Aldehyde selbst, wie Aldol oder Crotonaldehyd, lassen sich in Mischung mit den Aldehyden kondensieren. Bei der Herstellung von Mischkondensaten von Aldehyden und Ketonen mit Harnstoffen kann man auch Formaldehyd als Komponente **A12** einsetzen, wobei der Massenanteil an Formaldehyd in der Mischung der Aldehyde nicht mehr als 30 % betragen soll. Besonders bevorzugt sind Kondensate aus Isobutyraldehyd, Formaldehyd und Harnstoff (vgl. Ullmann, Enzyklopädie der technischen Chemie, 5. Aufl., Band A23, S. 104 f.). Kondensate, in denen Formaldehyd als einzige Oxoverbindung eingesetzt wird, sind für die Erfindung nicht geeignet.

Die Hydroxylzahl ist gemäß DIN EN ISO 4629 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

Die mehrfunktionellen Isocyanate **B** sind bevorzugt ausgewählt aus (cyclo)aliphatischen Isocyanaten **B1,** gemischt aliphatisch-aromatischen Isocyanaten **B2** und aromatischen Isocyanaten **B3** mit im Mittel mindestens 2 Isocyanat-Gruppen pro Molekül. Dabei werden solche Isocyanate bevorzugt, die nicht durch Umsetzung mit hydrophilen Verbindungen modifiziert sind. Diese Isocyanate enthalten daher weniger als 0,1 mol/mol an Säuregruppen oder basischen Gruppen oder anderen hydrophile, insbesondere von Oligo- oder Polyoxyalkylen-Verbindungen, besonders von Oxyäthylen-Verbindungen, abgeleitete Bausteine im Molekül. Bevorzugt ist dieser Anteil höchstens 0,05 mol/mol, und besonders bevorzugt höchstens 0,02 mol/mol.

Beispiele für geeignete Isocyanate sind Trimethylendiisocyanat, Tetramethylendiisocyanat, Pentamethylendiisocyanat, Hexamethylendiisocyanat (HDI), 1,2-Propylendiisocyanat, Äthyläthylendiisocyanat, 2,3-Dimethyläthylendiisocyanat, 1-Methyltrimethylendiisocyanat, 1,3-Cyclopentylendiisocyanat, 1,4-Cyclohexylendüsocyanat, 1,2-Cyclohexylendiisocyanat, 1,3-Phenylendiisocyanat, 1,4-Phenylendiisocyanat, 2,4-Toluylendiisocyanat (TDI), 2,6-Toluylendiisocyanat (TDI), 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan (IPDI), Bis-(4-isocyanato-cyclohexyl)methan (HMDI), 4,4'-Diisocyanatodiphenyläther, 2,3-Bis-(8-isocyanatooctyl)-4-octyl-5-hexylcyclohexen, die isomeren Trimethylhexamethylendiisocyanate, Tetramethylxylylendiisocyanat (TMXDI), Uretdione und Isocyanurate von obigen Diisocyanaten sowie Allophanate und Biurete abgeleitet von obigen Diisocyanaten. Gemische solcher Di- oder Polyisocyanate können ebenfalls eingesetzt werden. Besonders bevorzugt werden die Diisocyanate, insbesondere TDI, TMXDI, HDI, HMDI und IPDI sowie deren Uretdione, Isocyanurate, Allophanate und Biurete.

Geeignete aliphatische Säuren **C** weisen jeweils mindestens eine gegenüber Isocyanaten reaktive Gruppe wie Hydroxylgruppen, Aminogruppen, Mercaptogruppen oder Hydrazin-Gruppen auf, sowie mindestens eine Säuregruppe, bevorzugt eine Carbon- oder Sulfonsäuregruppe. Dabei können die als Komponente **C** geeigneten Moleküle auch verschiedenartige solcher Gruppen enthalten, beispielsweise im selben Molekül eine Aminogruppe, eine Hydroxylgruppe und eine Carbonsäuregruppe, oder eine Hydroxylgruppe, eine Carbon- und eine Sulfonsäuregruppe. Es ist bevorzugt, daß die Säuregruppen gegenüber Isocyanaten weniger reaktiv sind als die erstgenannten gegenüber Isocyanaten reaktiven Gruppen. Bevorzugt sind insbesondere aliphatische Hydroxycarbonsäuren wie Milchsäure, Dimethylolpropionsäure, Weinsäure, Traubensäure, Glykolsäure, Dihydroxybemsteinsäure und Äpfelsäure; Aminosäuren wie Glycin, Alanin, Ornithin, Asparaginsäure, Taurin, Hydroxyaminosäuren wie Tyrosin oder Mercaptoaminosäuren wie Cystein. Besonders bevorzugt wird Dimethylolpropionsäure. Auch diese Komponente **C** kann Mischungen mehrerer der geeigneten Stoffe enthalten.

Die aliphatischen Hydroxylgruppen enthaltenden Polyäther gemäß **D** weisen eine zahlenmittlere molare Masse Mₙ von 200 g/mol bis 8000 g/mol und mindestens eine Hydroxylgruppe pro Molekül auf; der Massenanteil an Oxyäthylen-Bausteinen in dem Polyäther(poly)ol beträgt üblicherweise mindestens 50 %, bevorzugt mindestens 80 %. Geeignet sind Polyoxyalkylenglykole wie Polyoxyäthylenglykol und dessen Mischpolymere mit Polyoxypropylen-Bausteinen. Es lassen sich auch die einseitig verätherten Polyäther(poly)ole einsetzen, wie Polyäthylenglykol-monomethyl- oder -äthyl-äther. Bevorzugt werden Polyäthylenglykole mit (zahlenmittleren) molaren Massen Mₙ von 200 g/mol bis 8000 g/mol und deren Monomethyläther.

Die erfindungsgemäßen Harze **ABCD** sind erhältlich durch Umsetzung der Komponenten **A** und **B** bei erhöhter Temperatur, vorzugsweise bei 30 °C bis 200 °C, vorzugsweise in der Schmelze ohne Zusatz eines Lösungsmittels, wobei jedoch gegebenenfalls ein unter den Reaktionsbedingungen inertes Lösungsmittel **E',** in Massenanteilen von bis zu 20 %, bezogen auf die Summe der Massen der Komponenten **A** bis **D** sowie des Lösungsmittels, zugegeben werden kann. Die Umsetzung wird solange vorgenommen, bis der Gehalt an unreagierten Isocyanatgruppen in der Reaktionsmischung einen Wert von unter 0,1 g/(100 g) erreicht hat. Danach wird (weiteres) Lösungsmittel **E** zugegeben; sofern Verbindungen gemäß **C** eingesetzt wurden, kann durch Zugabe von Aminen oder wäßrigem Ammoniak zumindest teilweise neutralisiert werden. Die Menge an Alkalien wird dabei gegebenenfalls so gewählt, daß mindestens die Hälfte der Säuregruppen des Harzes neutralisiert ist. Bevorzugt wird jedoch vollständig neutralisiert.

Das Verhältnis der Masse der Lösungsmittel **E** und **E'** zur Masse des Harzes **ABCD** beträgt vorzugsweise 1:9 bis 9:1, insbesondere 2:8 bis 4:6. Als besonders vorteilhaft hat sich ein Massenanteil der Lösungsmittel in der Lösung von ca. 10 % bis ca. 40 % erwiesen.

Als Lösungsmittel **E'** werden solche Lösungsmittel verwendet, die keine gegenüber Isocyanatgruppen reaktive Gruppen enthalten. Bevorzugt werden Dialkyläther von Äthylenglykol und dessen Oligomeren wie Dimethoxyäthan, Diäthylenglykoldimethyl- und -diäthyl-äther, Di- und Triäthylenglykol-diacetat, Aceton, Methyläthylketon und Diäthylketon.

Die Lösungsmittel **E** dürfen auch zusätzlich solche Gruppen enthalten, die mit Isocyanaten reagieren können. Solche Gruppen sind bevorzugt Hydroxylgruppen. Besonders bevorzugt werden neben den unter **E'** genannten Lösungsmitteln noch die Monoalkyläther von Äthylenglykol und dessen Oligomeren. Hier sind besonders Methoxyäthanol, Äthoxyäthanol und Butoxyäthanol sowie die Methyl-, Äthyl- und Butyläther von Di- und Triäthylenglykol sowie höheren Oligomeren zu nennen.

Es ist für die erfindungsgemäße Anwendung nicht erforderlich, diese Lösungsmittel zu entfernen; beispielsweise kann der Massenanteil derartiger Lösungsmittel in dem Pastenharz bis zu 20 %, bevorzugt bis zu 10 %, betragen.

Diese Harze können bei der Herstellung von Pigmentpräparationen für lösungsmittelhaltige Lacksysteme eingesetzt werden und bewirken durch ihre hervorragende Pigmentbenetzung insbesondere bei Eisenoxid-Pigmenten eine feine Verteilung ohne Reagglomeration. Gegenüber den nicht modifizierten Aldehyd- oder Ketonharze, die selbstverständlich ebenfalls in lösungsmittelhaltigen Systemen eingesetzt werden können, zeichnen sich die erfindungsgemäß modifizierten Aldehyd- und Ketonharze dadurch aus, daß in überraschender Weise die Verträglichkeit und das Pigmentbindevermögen bei Pigmenten wie Titandioxid oder den genannten Eisenoxidpigmenten verbessert wurde, ohne daß die bekannt guten Pigmentdispergiereigenschaften bei den organischen Pigmenten wie Phthalocyanin-Pigmenten und Chinacridonpigmenten verschlechtert werden.

Die Erfindung wird durch die nachfolgenden Beispiele näher erläutert, ohne sie jedoch dadurch in ihrem Umfang zu beschränken. In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. "Teile" (abgekürzt "Tle.") sind stets Massenanteile. Konzentrationsangaben in "%" sind Massenanteile des gelösten Stoffes in der Lösung (Masse des gelösten Stoffes, dividiert durch die Masse der Lösung).

### Beispiele

### Beispiel 1: Urethanmodifizierte Pastenharze B1 und B2 auf Basis von Aldehyd- bzw. Keton-Harnstoffharzen (siehe Tabelle 1)

Zunächst wurde eine 80 %ige Lösung des Aldehyd- oder Ketonharzes A in Toluol hergestellt und die im Rohstoff enthaltene Feuchtigkeit durch kurze Azeotropdestillation bei 115 °C bis 120 °C entfernt. Danach wurde die Reaktionsmasse auf 40 °C bis 60 °C abgekühlt und die IsocyanatKomponente **B** langsam zugegeben. Die Reaktion wurde solange bei 80 °C unter Rühren fortgeführt, bis sich der NCO-Gehalt (Gehalt an freien Isocyanatgruppen) konstant blieb. Danach wurden die Komponente **C** bzw. **D** zugesetzt. Dabei wurde die Hydroxysäure **C** in einem geeigneten Lösungsmittel angelöst, um die homogene Verteilung zu erleichtern. Die Umsetzung wurde dann solange unter Anhebung der Temperatur auf 70 °C bis 100 °C geführt, bis ein Massenanteil an nicht umgesetzten Isocyanatgruppen von weniger als 0,1 % erreicht wurde. Dann wurde das Toluol destillativ entfernt und die Reaktionsmasse durch Zugabe eines wassertoleranten Lösungsmittels (BG oder MP) auf einen Festkörper-Massenanteil von 60 % bis 80 % verdünnt. Danach wurde die Säurezahl der Harze bestimmt; sodann erfolgte die Neutralisation der Säuregruppen bei einer Temperatur von 60 °C bis 70 °C. Dabei wurde ein pH-Wert von 7,0 bis 8,5 eingestellt. In weiteren Versuchen wurde die bevorzugte Variante durchgeführt, die Komponenten **A** und **C** bereits am Beginn gemeinsam vorzulegen, zu homogenisieren und dann, wie oben angegeben weiter zu verarbeiten.

Dabei bedeutet "DMPS" Dimethylolpropionsäure, "PEG 750" steht für ein Polyoxyäthylenglykol mit einer zahlenmittleren molaren Masse von ca. 750 g/mol. "BuOEtOH" bedeutet 2-Butoxyäthanol. Als Neutralisationsmittel wurden wäßrige Ammoniak-Lösung ("NH₄OH") (25 % NH₃ in wäßriger Lösung), Triäthanolamin ("TEA") bzw. Triäthylamin ("Et₃N") verwendet. "HDI" bedeutet 1,6-Diisocyanatohexan, "TDI" die kommerziell erhältliche Mischung von Tolylendiisocyanat, und "IPDI" Isophorondiisocyanat. Als "Harz A" wird ein handelsübliches Aldehydharz auf Basis von Acetaldehyd (âLaropal A 81, Harnstoff-Aldehyd Kondensat; Fa. BASF AG) mit einer Säurezahl von 1,5 mg/g bezeichnet, "Harz K" bedeutet ein Ketonharz (âLaropal K80, Harnstoff-Keton Kondensat; Fa. BASF AG) auf Basis von Cyclohexanon mit einer Hydroxylzahl von 110 mg/g bis 150 mg/g. Die weiteren Abkürzungen bedeuten: BG: Butylglykol, MP: Methoxypropanol, NM: Neutralisationsmittel, DMEA: Dimethyläthanolamin, TEA: Triäthylamin.

**Tabelle 1:**

| Herstellung der urethanmodifizierten Pastenharze (Massen der Komponenten **A, B**, **C** und **D** in g) | | | |
|---|---|---|---|
| | | **Harz B1** | **Harz B2** |
| A | | 1000 (Harz A) | 1380 (Harz K) |
| B | | 261 (TDI) | 522 (TDI) |
| C | | 134 (DMPS) | 134 (DMPS) |
| D . | | | 750 (PEG 750) |
| Säurezahl des Reaktionsprodukts | in mg/g | 40,1 | 20,1 |
| Masse des Reaktionsprodukts | in g | 297 | 696 |
| Lösungsmittel | | MP | B G |
| Neutralisationsmittel | | TEA | DMEA |
| Festkörper-Massenanteil | in % | 65 | 65 |

Die Säurezahl ist gemäß DIN EN ISO 3682 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Der Festkörper-Massenanteil wurde bestimmt als nichtflüchtiger Anteil nach DIN EN ISO 3251 (Einwaage 1 g, Trocknung während 1h bei 125 °C).

### Beispiel 2: Herstellung der Pigmentpasten

Mit dem Pastenharz B1 wurden nun folgende Pasten formuliert (Massen der eingesetzten Stoffe):
- **Blau-Paste**: 130,00 g B1 (65 %ige Lösung)
130,00 g Methoxypropanol
40,60 g ®Paliogenblau L 6480
12,20 g ®Additol XL 255
312,80 g
- **Weiß-Paste**: 40,00 g B1 (65 %ige Lösung)
30,00 g Methoxypropanol
115,00 g ®Kronos 2310 (Titandioxid-Pigment)
2,00 g ®Additol XL 255
187,00 g
®Paliogenblau L 6480 (Fa. BASF AG)
®Kronos 2310 (Fa. Kronos Titan)

### Beispiel 3: Pigmentierte Lacke

Diese zwei Pasten (Pigmentkonzentrate) werden nun zur Pigmentierung eines lösungsmittelhaltigen Klarlacks basierend auf der Formulierung F1 und eines wäßrigen Klarlacks basierend auf der Formulierung F2 eingesetzt.

### F1:

| Lösungsmittelhaltiger Klarlack: (Massenangaben in g) | |
|---|---|
| 185,4 | ®Vialkyd AR 340 / 60SNA |
| 238,3 | ®Vialkyd AC 383/ 70SNB |
| 161 | ®Maprenal MF 514/60IB |
| 584,7 | |

®Vialkyd AR 340 / 60SNA, ®Vialkyd AC 383/ 70 SNB, beides handelsübliche lösungsmittelhaltige Alkydharze, ®Maprenal MF 514/60IB, Melaminharzhärter gelöst in Isobutanol (Surface Specialties Austria GmbH)
SNA: Solvent Naphtha A, Aromatengemisch, Siedebereich 150 °C bis 180 °C
SNB: Solvent Naphtha B, Aromatengemisch, Siedebereich 180 °C bis 210 °C

### F2:

| Wäßriger Klarlack: (Massenangaben in g) | |
|---|---|
| 98,1 | ®Resydrol AY 586w/38WA |
| 0,4 | Ammoniak |
| 1,1 | ®Additol VXW 4940/VE Wasser = 1/1 (Sikkativ) |
| 0,2 | ®Additol XL 297 (Antihautmittel) |
| 0,2 | ®Additol VXL 4930 (Verlaufmittel) |
| 100 | |

®Resydrol AY 586w/38WA, wasserverdünnbares acrylmodifizierets Alkydharz, ®Additol VXW 4940 (Angabe des Mischungsverhältnisses als Massenteile), ®Additol XL 297, ®Additol VXL 4930 (Surface Specialties Austria GmbH); VE-Wasser: voll entsalztes Wasser

Diese Klarlacke wurden dann mit den Pigmentpasten gemäß den Rezepturen L1 bis L4 (Angaben der Massen der verwendeten Stoffe in g) pigmentiert. Die Einarbeitung der Pasten erfolgte unter Verwendung eines Flügelrührers. Bei den wäßrigen Systemen wurde mit Dimethyläthanolamin (DMEA) ein pH-Wert von 8,0 bis 8,5 eingestellt. Nach der Applikation auf einer Glasplatte (150 µm Naßfilmdicke) wurden die Vernetzung und der Glanz gemessen.

### L1:

| lösungsmittelhaltiger Blaulack: (Massenangaben in g) | |
|---|---|
| 5 | Blau-Paste aus Beispiel 2 |
| 30 | lösungsmittelhaltiger Klarlack F1 |
| 10 | ®Additol XL 121 (Verlaufmittel) |
| 200 | Lösungsmittelgemisch* SNA / B = 7/3 |
| 37,1 | |

| | |
|---|---|
| *: SNA = Solvent Naphtha A, Aromatengemisch, Siedebereich 150 °C bis 180 °C; B = n-Butanol; Angabe der Massenteile im Gemisch | |

### L2:

| lösungsmittelhaltiger Weißlack: (Massenangaben in g) | |
|---|---|
| 10 | Weiß-Paste aus Beispiel 2 |
| 30 | lösungsmittelhaltiger Klarlack F1 |
| 0,1 | ®Additol XL 121 (Verlaufmittel) |
| 2 | Lösungsmittelgemisch SNA / B = 7/3 |
| 42,1 | |

Nach der Applikation jeweils eines 150 µm dicken Naßfilms der Lacke **L1** und **L2** auf Glas wurde 30 Minuten bei 130°C eingebrannt.

### L3:

| wäßriger Blaulack: (Massenangaben in g) | | |
|---|---|---|
| 4 | Blau-Paste aus Beispiel 2 | |
| 40 | wäßriger Klarlack F2 | |
| 0,3 | DMEA | |
| 44,30 | | pH Wert = 8,25 |

### L4:

| wäßriger Weißlack: (Massenangaben in g) | | |
|---|---|---|
| 800 | Weiß-Paste aus Beispiel 2 | |
| 40 | wäßriger Klarlack F2 | |
| 0,3 | DMEA | |
| 44,3 | | pH Wert = 8,21 |

Nach der Applikation jeweils eines 150 µm dicken Naßfilms der Lacke L3 und L4 auf Glas wurde der Glanz der Lackfilme nach 48 Stunden Lufttrocknung bei Raumtemperatur (RT; 23°C) gemessen. Die Glanzmessung wurde mit einem Gonioreflektometer (Fa. BYK) bei einem Winkel von 60° und 20° durchgeführt (Werte siehe untenstehende Tabelle).

### Glanzwerte:

| Lacke | Glanz (60°) | Glanz (20°) |
|---|---|---|
| L1 | 94,50 % | 83,20 % |
| L2 | 98,20 % | 86,00 % |
| L3 | 92,60 % | 86,60 % |
| L4 | 92,70 % | 83,30 % |

Diese Resultate der Glanzmessung zeigen, daß unter Verwendung der erfindungsgemäßen Harze Pigmentpasten hergestellt werden können, die gleich gute Resultate für lösungsmittelhaltige Lacke (L1, L2) und für wasserverdünnbare Lacke (L3, L4) ergeben.

## Patentansprüche

1. Verwendung von urethanmodifizierten hydrophilen Harzen **ABCD** als Pastenharze für lösungsmittelhaltige Lacke, wobei die Harze **ABCD** Umsetzungsprodukte sind von von Massenanteilen in der Reaktionsmischung von
10 % bis 90 % Aldehyd- bzw. Keton-Harzen A mit einer Hydroxylzahl von 20 mg/g bis 300 mg/g, einer Erweichungstemperatur von 60 °C bis 140 °C und einer zahlenmittleren molaren Masse Mₙ von 500 g/mol bis 3000 g/mol,
5 % bis 30 % mehrfunktionellen Isocyanaten **B** mit im Mittel mindestens 2 Isocyanat-Gruppen pro Molekül,
0 % bis 30 % aliphatischen Säuren **C** mit jeweils mindestens einer Säuregruppe und jeweils mindestens einer Gruppe, die mit Isocyanaten unter Bildung einer Urethan- oder Harnstoff-Struktur reagieren kann, sowie
0 % bis 70 % eines aliphatischen Polyäthers **D mit** einer zahlenmittleren molaren Masse Mₙ von 200 g/mol bis 8000 g/mol und mindestens einer Hydroxylgruppe pro Molekül,
wobei die Summe der Massenanteile der Edukte **A** bis **D** stets 100 % ergibt, und mindestens eines der Edukte **C** und **D** eingesetzt wird.

2. Verwendung nach Anspruch 1, **dadurch gekennzeichnet, daß** der Massenanteil der aliphatischen Säuren **C** in der Reaktionsmischung mindestens 2 % beträgt.

3. Verwendung nach Anspruch 1, **dadurch gekennzeichnet, daß** der Massenanteil der aliphatischen Polyäther **D** in der Reaktionsmischung mindestens 5 % beträgt.

4. Verwendung nach Anspruch 1, **dadurch gekennzeichnet, daß** die Harze **A** Kondensationsprodukte sind von (cyclo)aliphatischen Oxoverbindungen **A1** und Harnstoffen oder substituierten Harnstoffen **A2**.

5. Verwendung nach Anspruch 1, **dadurch gekennzeichnet, daß** die Isocyanate **B** weniger als 0,1 mol/mol an hydrophilen Gruppen enthalten, ausgewählt aus Säuregruppen, basischen Gruppen, und Oligo - und Polyoxyalkylengruppen.

6. Verwendung nach Anspruch 1, **dadurch gekennzeichnet, daß** als Säure C aliphatische Hydroxycarbonsäuren eingesetzt werden.

7. Verwendung nach Anspruch 1, **dadurch gekennzeichnet, daß** das Harz **ABCD** mit Lösungsmitteln E und E' verdünnt wird, wobei als Lösungsmittel **E** beliebeige Lösungsmittel eingesetzt werdn können, während die Lösungsmittel **E'** keine Gruppen enthalten, die reaktiv gegenüber Isocyanaten sind, und die Lösungsmittel **E'** vor oder während der Umsetzung, und **E** nach der Umsetzung zugesetzt werden, und wobei das Verhältnis der Summe der Masse von **E** und **E'** zur Masse des Harzes **ABCD** 9:1 bis 1:9 beträgt.

8. Verwendung nach Anspruch 1, **dadurch gekennzeichnet, daß** die Harze **ABCD** mit Pigmenten verrieben werden.

9. Verwendung nach Anspruch 8, **dadurch gekennzeichnet, daß** die Harze **ABCD** in Kombination mit Eisenoxidpigmenten eingesetzt werden.
